# EUROPÄISCHE PATENTSCHRIFT

(11) **EP 3 022 084 B1**
(45) Veröffentlichungstag und Bekanntmachung des Hinweises auf die Patenterteilung: **18.11.2020**
(21) Anmeldenummer: 14739159.3
(22) Anmeldetag: 15.07.2014
(51) Int. Cl.: B60N 2/90, B60N 2/809, B60N 2/58

(54) **BEZUGSDURCHFÜHRUNG FÜR EINE KOPFSTÜTZENSTANGE EINER KOPFSTÜTZE**
COVER FEED-THROUGH FOR A HEAD-RESTRAINT ROD OF A HEAD RESTRAINT
TRAVERSÉE D'HABILLAGE POUR BARRE D'APPUI-TÊTE

(30) Priorität: 18.07.2013 DE 102013214146; 15.08.2013 DE 102013216214
(43) Veröffentlichungstag der Anmeldung: 25.05.2016
(73) Patentinhaber: Adient Luxembourg Holding S.à r.l., 1855 Luxembourg (LU)
(72) Erfinder: WEHLING, Karsten, 51399 Burscheid (DE)
(74) Vertreter: Finger, Catrin
(86) Internationale Anmeldenummer: PCT/EP2014/065096
(87) Internationale Veröffentlichungsnummer: WO 2015/007715

(56) Entgegenhaltungen:
- DE-A1-102007 010 064
- DE-A1-102011 008 692
- FR-A1- 2 471 760
- JP-A- 2001 012 657

## Beschreibung

Die Erfindung betrifft eine Bezugsdurchführung für eine Kopfstützenstange einer Kopfstütze eines Fahrzeugsitzes. Weiterhin betrifft die Erfindung einen Fahrzeugsitz.

Es sind verschiedenartige Bezugsdurchführungen aus dem Stand der Technik bekannt, welche üblicherweise mehrteilig ausgebildet sind.

So ist aus der DE 10 2007 010 064 A1 eine Bezugsdurchführung bekannt, die aus einem ersten, den Ausschnitt des Bezugs übergreifenden Teil und einem zweiten, den Ausschnitt des Bezugs untergreifenden, mit dem ersten Teil verbindbaren Teil umfasst.

Die US 5,080,437 A offenbart ebenfalls eine zweiteilige Führungshülse für Kopfstützenstangen einer Kopfstütze.

Des Weiteren ist in der US 2009/0184557 A1 eine Kopfstützenführung zum Führen und Anordnen einer Kopfstützenvorrichtung beschrieben. Die Kopfstützenführung weist eine Führungsbuchse mit einer achsialen Bohrung zur Anordnung der Kopfstützenvorrichtung darin auf. Innerhalb der Führungsbuchse ist ein Hebel schwenkbar angeordnet, wobei der Hebel eine Öffnung zur Aufnahme der Kopfstützenvorrichtung aufweist. Weiterhin weist die Kopfstützenführung eine Feder auf, deren Abschnitte gegen die Kopfstützenvorrichtung vorgespannt sind. Ein Schwenken des Hebels in eine erste Richtung ermöglicht eine axiale Verstellung der Kopfstützenvorrichtung. Ein Schwenken des Hebels in eine zweite Richtung ermöglicht ein Entfernen der Kopfstützenvorrichtung aus der Führungsbuchse der Kopfstützenführung heraus.

Darüber hinaus ist in der JP H06-44 894 B2 ein Fahrzeugsitz gezeigt und zumindest Komponenten des Fahrzeugsitzes beschrieben.

Ferner ist aus der JP 2001 012657 A eine Durchführung für einen Verriegelungsstift zum Verriegeln einer Rückenlehne offenbart. Die Durchführung weist eine Hülse auf, wobei die Hülse eine Mehrzahl von vertikalen schlitzförmigen Ausnehmungen aufweist, die über einen Umfang der Hülse verteilt und jeweils zu einem Ende hin geöffnet sind.

Aufgabe der vorliegenden Erfindung ist es, eine verbesserte Bezugsdurchführung anzugeben, welche einfach montierbar und kostengünstig herstellbar ist. Weiterhin ist es Aufgabe der vorliegenden Erfindung einen verbesserten Fahrzeugsitz anzugeben.

Die Aufgabe wird erfindungsgemäß hinsichtlich der Bezugsdurchführung durch die Merkmale des Anspruchs 1 und hinsichtlich des Fahrzeugsitzes durch die Merkmale des Anspruchs 7 gelöst.

Vorteilhafte Ausgestaltungen der Erfindung sind Gegenstand der Unteransprüche.

Eine erfindungsgemäße Bezugsdurchführung für eine Kopfstützenstange einer Kopfstütze eines Fahrzeugsitzes ist als ein einteiliges, selbstfixierendes Führungselement ausgebildet und weist eine geschlossene Oberseite und eine von dieser über einen Durchstieg beabstandete Unterseite auf, wobei die Unterseite zumindest eine Ausnehmung aufweist, die kreissegmentförmig oder schlitzförmig ist und wobei sich die Ausnehmung i im Wesentlichen in eine Umfangsrichtung der Unterseite erstreckt.

Mittels der kreissegmentförmigen Ausnehmung an der Unterseite der Bezugsdurchführung kann diese in ein vorhandenes Loch eines Sitzbezuges eingefädelt werden. Durch Drehung der Bezugsdurchführung wird diese in den Sitzbezug fixiert, insbesondere derartig eingeschraubt bis sich die Unterseite vollständig unterhalb des Sitzbezuges geschoben hat. Eine solche einteilige und selbstfixierende Lösung für die Bezugsdurchführung ermöglicht einen flexiblen Montagezeitpunkt, da die Bezugsdurchführung an den Sitzbezug sowohl vor als auch nach der Montage des Sitzbezuges an der Sitzlehne fixiert werden kann. Mit anderen Worten: Die einteilige Bezugsdurchführung kann auch bei einer fertig bezogenen Sitzlehne montiert werden. Dies ist eine bei den herkömmlichen zwei- oder mehrteiligen Bezugsdurchführungen nicht möglich. Die Bezugsdurchführung ist hierzu als ein Einkomponenten-Kunststoffteil, beispielsweise als ein Spritzgussteil aus Acrylester-Styrol-Acrylnitril/Polyamid, kurz: ASA/PA, ausgeführt. Alternativ ist auch die Verwendung anderer Materialien, wie z.B. Acrylnitril-Butadien-Styrol, Polypropylen, Polyethylen, Polycaprolactam, etc. möglich.

Für eine einfache Montage des Sitzbezuges ist gemäß einer möglichen Weiterbildung die Bezugsdurchführung kreisförmig und mittels des inneren Durchstiegs insbesondere kreisringförmig ausgebildet.

In einer Ausgestaltung sind die Ober- und die Unterseite jeweils kreisringförmig ausgeformt und mittels des inneren Durchstiegs über einen umlaufenden Radialspalt voneinander beabstandet. In dem Radialspalt ist beispielsweise ein Sitzbezug anordenbar.

Die Innenseite des Durchstiegs weist in einer möglichen Weiterbildung zumindest zwei einander gegenüberliegende elastisch verformbare Rippen auf, die von der Innenseite radial nach innen stehend ausgeformt sind. Beispielsweise sind die Rippen als eine Art dünne Lippen ausgeformt, so dass diese verformt und/oder weggebogen werden können. Die Rippen sind mit dem Führungselement beispielsweise im Material, z.B. Kunststoff, gleich ausgebildet. Alternativ ist die Bezugsdurchführung als ein Zweikomponenten-Kunststoffteil gebildet, wobei die Elastizität des Kunststoffes aus dem die Rippen gebildet sind insbesondere höher ist als die Elastizität des Kunststoffes, aus dem das Führungselement gebildet ist. Alternativ können an der Innenseite des Durchstiegs auch radial nach innen ragende Auswölbungen, ein radial nach innen ragender, deformierbarer Innensteg oder einander gegenüberliegende elastische, deformierbare Bügel angeordnet sein.

Zusätzlich kann die Innenseite des Durchstiegs zumindest eine Hinterschneidung aufweisen. Die Hinterschneidung dient insbesondere zur Aufnahme eines Montagewerkzeuges.

Alternativ oder zusätzlich weist die Bezugsdurchführung an ihrer, von außen nicht sichtbaren Unterseite zumindest eine Abstützung auf, welche oberflächenseitig auf der Unterseite radial nach außen verläuft. Die zumindest eine Abstützung ist beispielsweise als eine linienförmige Erhebung ausgeformt. Mittels der Abstützung ist eine stabile Selbstfixierung der Bezugsdurchführung möglich.

Weiterhin kann die Bezugsdurchführung zusätzlich zumindest ein Orientierungselement, z. B. einen Pfeil oder ein anderes Symbol, aufweisen, um dem Monteur bei der Montage der Bezugsdurchführung an einem Bezug eine Orientierungshilfe zu geben.

Ein erfindungsgemäßer Fahrzeugsitz umfasst einen Bezug, eine Kopfstütze und eine zuvor beschriebene I Bezugsdurchführung.

Zur einfachen Anordnung der Bezugsdurchführung in der Kopfstütze, weist der Bezug eine Durchgangsöffnung auf, von welcher sich radial nach außen ein Schlitz erstreckt. Die Bezugsdurchführung wird dabei über die Ausnehmung in die Durchgangsöffnung des Bezuges und mit Hilfe des Schlitzes eingefädelt.

Anhand der beigefügten schematischen Figuren wird die Erfindung näher beschrieben. Dabei zeigen:
- Figur 1: schematisch in perspektivischer Darstellung schräg von oben eine Bezugsdurchführung,
- Figuren 2-3: schematisch in perspektivischer Darstellung leicht schräg von der Seite eine Bezugsdurchführung mit einer im Durchstieg angeordneten Kopfstützenstange,
- Figuren 4-22: schematisch weitere verschiedene Ausführungsformen für eine Bezugsdurchführung in verschiedenen Ansichten.

Einander entsprechende Teile sind in allen Figuren mit den gleichen Bezugszeichen versehen.

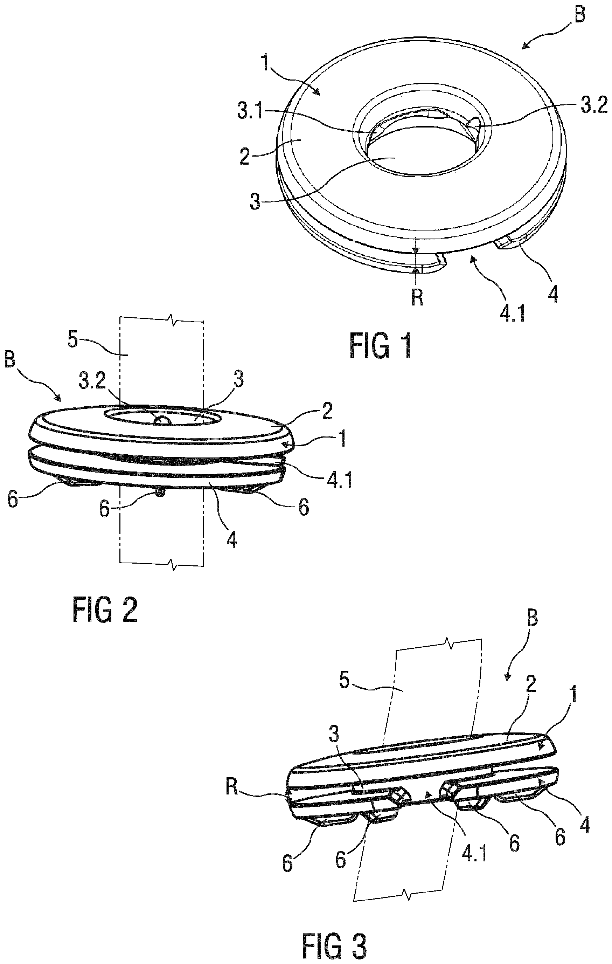

Die **Figur 1** zeigt in einer perspektivischen Ansicht eine mögliche Ausführungsform für eine Bezugsdurchführung B, welche als ein einteiliges und selbstfixierendes Führungselement 1 ausgebildet ist. Die Bezugsdurchführung B ist beispielsweise als ein einteilig hergestellter Kunststoffkörper, insbesondere ein Spritzguss- oder Fließpressteil ausgeführt. Die Bezugsdurchführung B wird verwendet in Öffnungen eines Bezuges 8, insbesondere eines Sitzlehnenbezuges eines nicht näher dargestellten Fahrzeugsitzes.

Das Führungselement 1 umfasst eine geschlossene Oberseite 2 und eine von dieser über einen Durchstieg 3 beabstandete Unterseite 4. Die Unterseite 4 weist zumindest eine Ausnehmung 4.1 auf. Der Rand der Ausnehmung 4.1 ist abgerundet und gegebenenfalls spitz zulaufend mit leicht abgerundeter Kante ausgebildet.

Die einteilige Bezugsdurchführung B ist insbesondere kreisförmig und mittels des inneren Durchstiegs 3 insbesondere kreisringförmig, oder alternativ oval, ausgebildet. Die Ober- und die Unterseite 2, 4 sind jeweils kreisringförmig ausgeformt und mittels des inneren Durchstiegs 3 über einen umlaufenden Radialspalt R voneinander beabstandet.

Die von außen oder oben sichtbare Oberseite 2 der Bezugsdurchführung B ist geschlossen ausgeführt und insbesondere eben und glatt. Sowohl der Außenrand als auch der Innenrand der Oberseite 2 sind angefast, insbesondere schräg angefast, ausgeführt.

Die Innenseite des Durchstiegs 3 weist zumindest zwei einander gegenüberliegende verformbare, insbesondere elastisch verformbare oder flexible Rippen 3.1 auf, die von der Innenseite radial nach innen stehend ausgeformt sind. Dabei sind die Rippen 3.1 in der Art von dünnen Lippen ausgeformt, so dass diese verformt, weggebogen werden können. Hierzu ist die einteilige Bezugsdurchführung B als ein Einkomponenten-Kunststoffteil, insbesondere ein Spritzgussteil aus ASA ausgeführt. Alternativ kann die einteilige Bezugsdurchführung B aus einem Zweikomponenten-Kunststoffteil ausgeführt sein, wobei der Kunststoff des Führungselements 1 fester als der Kunststoff der verformbaren Rippen 3.1 ist.

Zusätzlich kann die Innenseite des Durchstiegs 3 zumindest eine Hinterschneidung 3.2 zur Aufnahme eines Montagewerkzeuges aufweisen. Die Bezugsdurchführung B kann aber auch ohne Hilfe eines Montagewerkzeuges montiert werden.

**Figur 2** zeigt eine weitere Ausführungsform für eine Bezugsdurchführung B in einer perspektivischen Darstellung von der Seite mit einer in dem Durchstieg 3 angeordneten Kopfstützenstange 5 einer nicht näher dargestellten Kopfstütze.

Zusätzlich umfasst die Bezugsdurchführung B an deren, von außen nicht sichtbaren Unterseite 4 Abstützungen 6. Die Abstützungen 6 sind als linienförmige Erhebungen ausgeformt und verlaufen oberflächenseitig auf der Unterseite 4 radial nach außen.

**Figur 3** zeigt eine weitere Ansicht einer Bezugsdurchführung B von der Seite im Bereich der Ausnehmung 4.1. In dieser Ansicht ist der Radialspalt R zwischen der Oberseite 2 und der Unterseite 4 sowie die Außenwand des Durchstiegs 3 zu erkennen. Wie gezeigt, wird die Kopfstützenstange 5 leicht schräg in der Bezugsdurchführung B geführt und angeordnet.

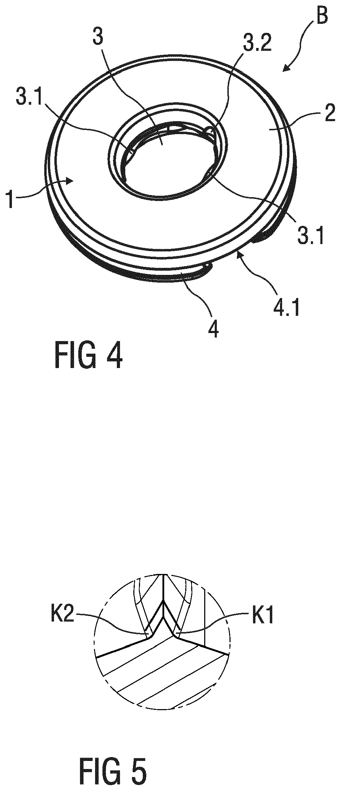

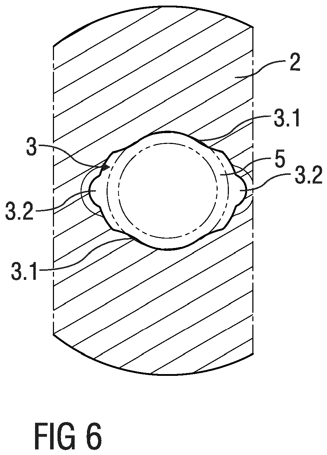

Wie in den **Figuren 4** **und** **6** gezeigt, weist die Bezugsdurchführung B für eine schräg verlaufende Führung und Anordnung der Kopfstützenstange 5 in der Bezugsdurchführung B einen Durchstieg 3 mit einer ovalen Querschnittsform auf. Die äußere Querschnittsform der Bezugsdurchführung B ist weitestgehend rund. Der ovale Querschnitt des Durchstiegs 3 ist in den Figuren 4 und 6 deutlich erkennbar.

**Figur 5** zeigt in vergrößerter Darstellung zwei Kontaktstellen K1, K2, an welchen die Kopfstützenstange 5 in Anlage kommt, wenn diese in die Bezugsdurchführung B eingeführt und positioniert wird.

**Figur 6** zeigt in vergrößerter Darstellung die Oberseite 2 von unten ohne Darstellung der Unterseite 4 der Bezugsdurchführung B.

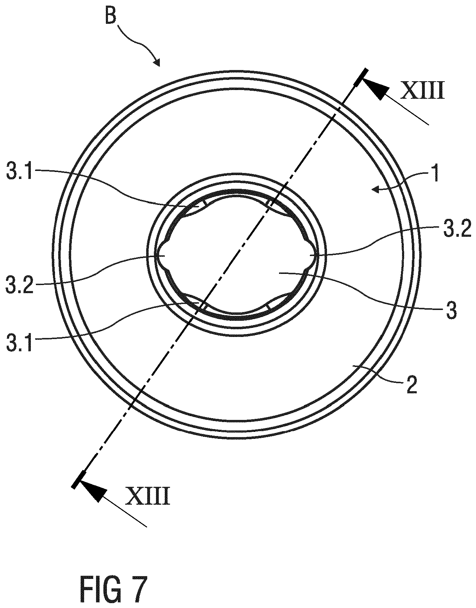

**Figur 7** zeigt die Bezugsdurchführung B in Draufsicht auf die Oberseite 2 mit zwei im ovalförmigen Durchstieg 3 einander gegenüberliegenden verformbaren Rippen 3.1 und zwei ebenfalls im Durchstieg 3 einander gegenüberliegenden Hinterschneidungen 3.2.

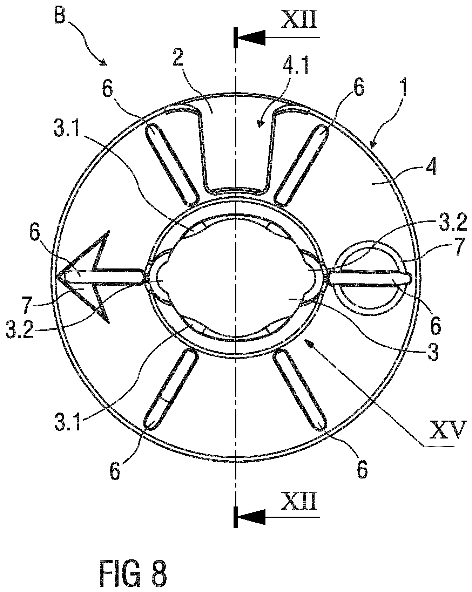

**Figur 8** zeigt die Bezugsdurchführung B in Draufsicht auf die Unterseite 4 mit sechs, insbesondere symmetrisch verteilt oberflächenseitig ausgeformten Abstützungen 6. Zusätzlich kann die Bezugsdurchführung B mit Orientierungselementen 7, z. B. einem Pfeil oder einem anderen Symbol, versehen sein, um dem Monteur bei der Montage der Bezugsdurchführung B an einem Bezug 8 eine Orientierungshilfe zu geben. Die Ausnehmung 4.1 als Montagehilfe zur Befestigung an einem Bezug 8 ist kreissegmentförmig ausgestaltet. Alternativ kann diese schlitzförmig ausgebildet sein.

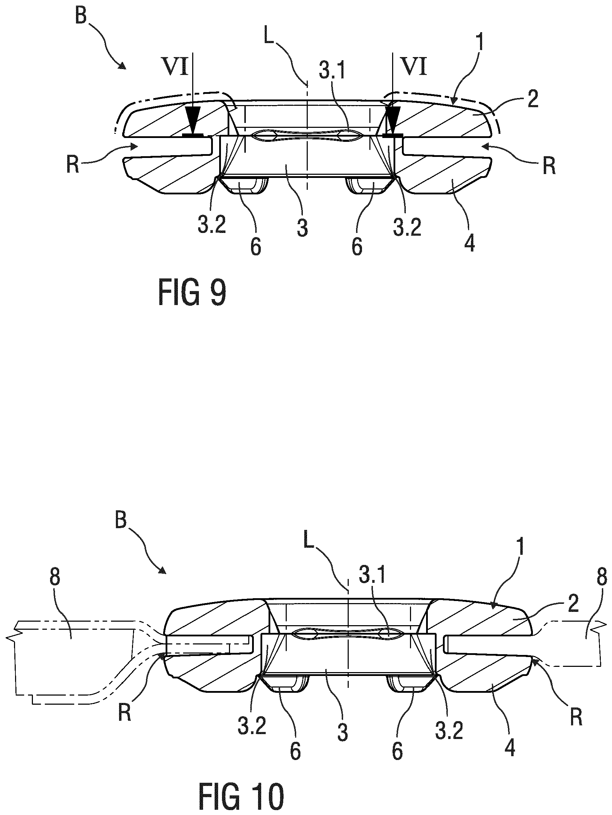

**Figuren 9 und 10** zeigen eine weitere Ausführungsform der Bezugsdurchführung B im Schnitt entlang einer Längsachse L durch die Hinterschneidungen 3.2, wobei in Figur 10 in den Radialspalt R ein Bezug 8 angeordnet ist.

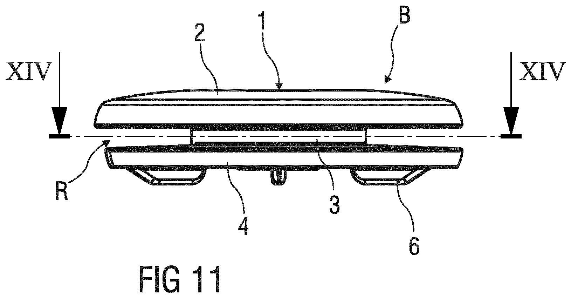

**Figur 11** zeigt eine weitere Ausführungsform der Bezugsdurchführung B in einer Seitenansicht.

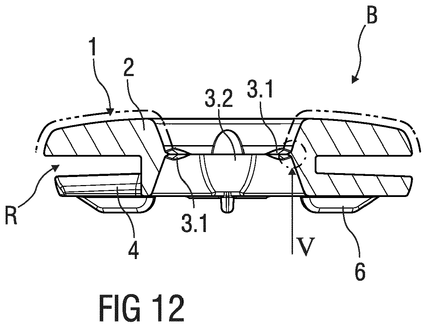

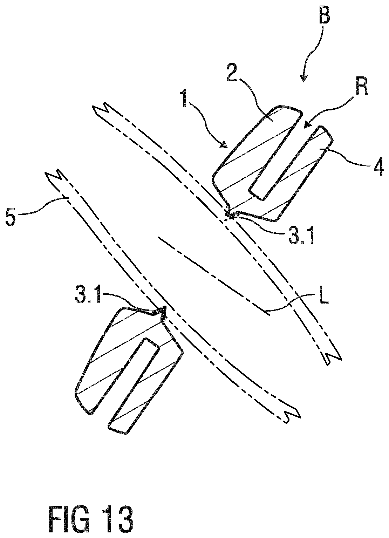

**Figuren 12** **und** **13** zeigen eine weitere Ausführungsform der Bezugsdurchführung B im Schnitt entlang einer Längsachse L durch die Rippen 3.1, wobei Figur 13 die Bezugsdurchführung B mit einer im Durchstieg 3 schräg angeordneten und an den Rippen 3.1 anliegenden Kopfstützenstange 5 zeigt.

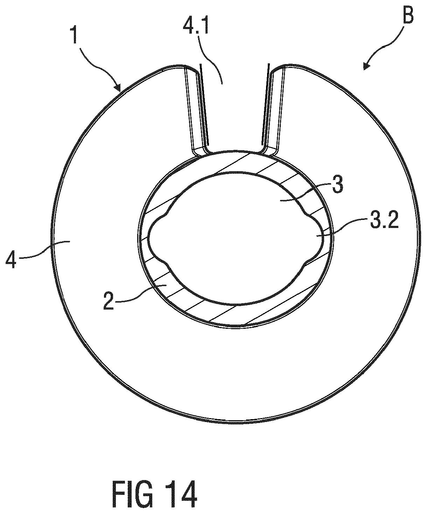

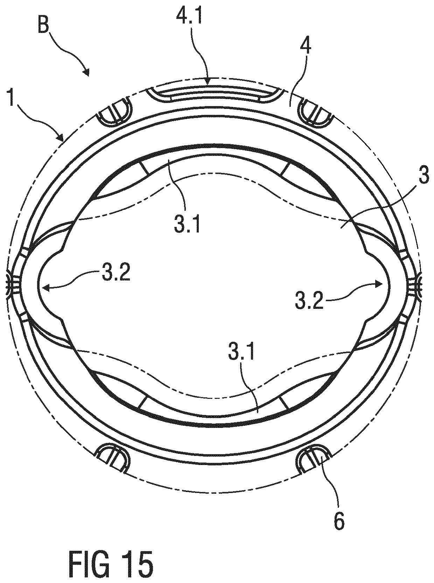

**Figuren 14** **und** **15** zeigen eine weitere Ausführungsform der Bezugsdurchführung B in Ansicht von unten auf die Unterseite 4.

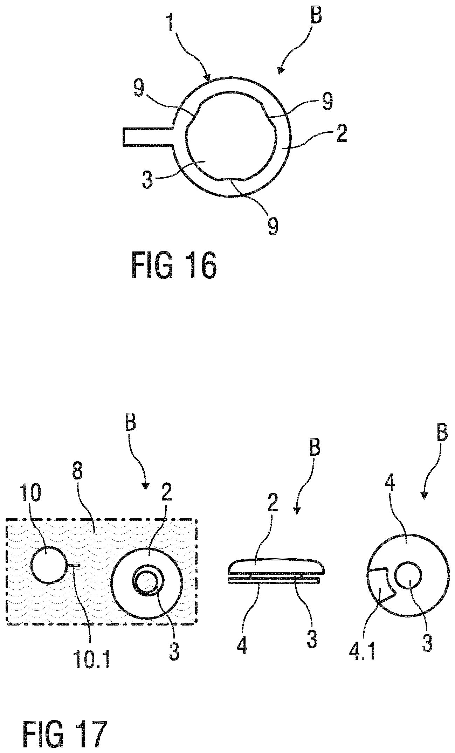

**Figur 16** zeigt eine alternative Ausführungsform für eine einteilige Bezugsdurchführung B mit drei symmetrisch im Durchstieg 3 radial nach innen ragenden Auswölbungen 9 in Draufsicht auf die Oberseite 2.

**Figur 17** zeigt eine weitere alternative Ausführungsform für eine einteilige Bezugsdurchführung B ohne zusätzliche Ausformungen oder verformbaren Elementen im Durchstieg 3 in einem im Bezug 8 montierten Zustand in Draufsicht auf die Oberseite 2, in einer Seitenansicht, so dass der Radialspalt R zur Aufnahme des Bezuges 8 sichtbar ist, und in einer Draufsicht auf die Unterseite 4, so dass die Ausnehmung 4.1 sichtbar ist.

Wie anhand der linken Darstellung des Bezuges 8, z. B. ein Sitzlehnenbezug aus Stoff oder Leder, zu sehen ist, weist der Bezug 8 eine Durchgangsöffnung 10 auf, von welcher sich radial nach außen ein Schlitz 10.1 erstreckt. Alternativ kann die Durchgangsöffnung 10 im Bezug 8 auch nur rund ohne einen Schlitz 10.1 ausgebildet sein.

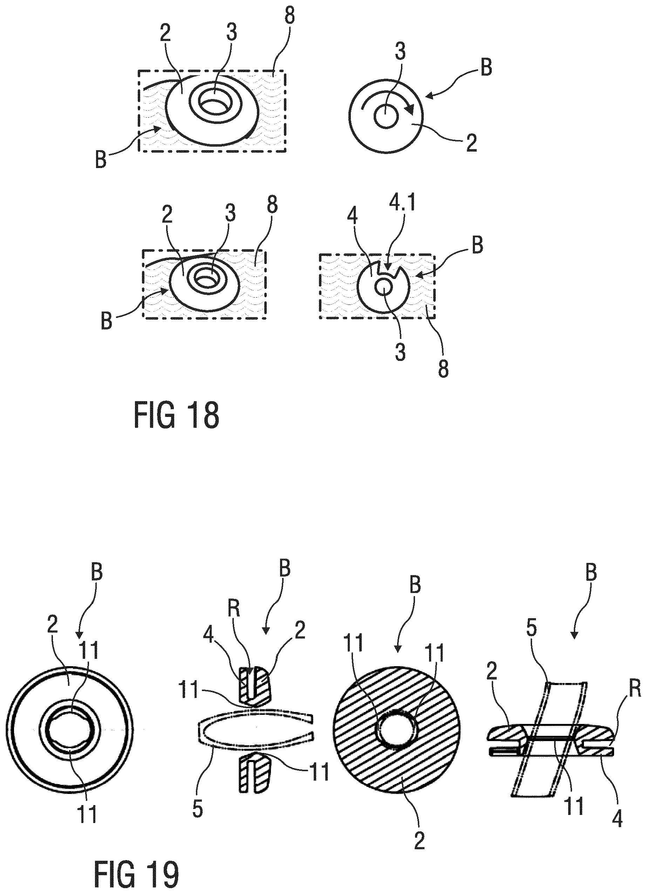

Die Montage der Bezugsdurchführung B wird anhand der Darstellungen in **Figur 18** erläutert. Bei der Montage der Bezugsdurchführung B wird diese über die Ausnehmung 4.1 auf der Unterseite 4 in die Durchgangsöffnung 10 des Bezuges 8 und gegebenenfalls mit Hilfe des Schlitzes 10.1 eingefädelt und solange gedreht, bis der Bezug 8 vollständig umlaufend im Radialspalt R der Bezugsdurchführung B angeordnet ist und somit die Unterseite 4 unterhalb des Bezuges 8 an diesen anliegt und die Bezugsdurchführung B im Bezug 8 "eingeschraubt" ist. Eine solche einteilige Bezugsdurchführung B ermöglicht auch eine flexible Montage auch bei einer fertig bezogenen Sitzlehne. Die Bezugsdurchführung B ist derart im Bezug 8 befestigt, dass diese bedingt axial auf der Kopfstützenstange 5 beweglich ist.

**Figur 19** zeigt verschiedene Darstellungen einer weiteren Ausführungsform für eine Bezugsdurchführung B mit einem umlaufenden, radial nach innen ragenden, deformierbaren Innensteg 11 unterschiedlicher Breite im ovalförmigen Durchstieg 3 ohne Hinterschneidungen 3.2.

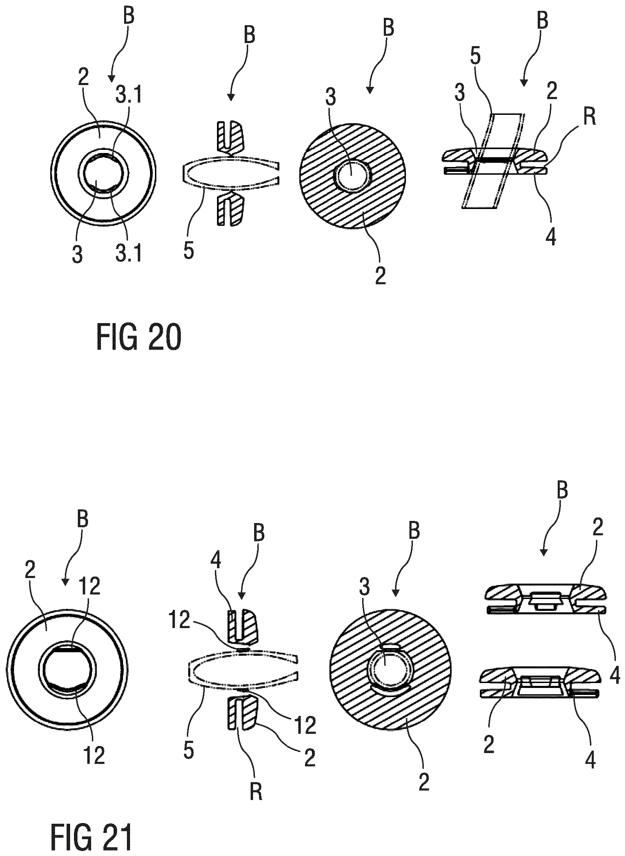

**Figur 20** zeigt verschiedene Darstellungen einer weiteren Ausführungsform für eine Bezugsdurchführung B mit den einander gegenüberliegenden deformierbaren Rippen 3.1 im ovalförmigen Durchstieg 3 ohne Hinterschneidungen 3.2.

**Figur 21** zeigt verschiedene Darstellungen einer weiteren Ausführungsform für eine Bezugsdurchführung B mit einander gegenüberliegenden elastischen deformierbaren Bügeln 12, in Art von Federbügeln oder -laschen, im ovalförmigen Durchstieg 3.

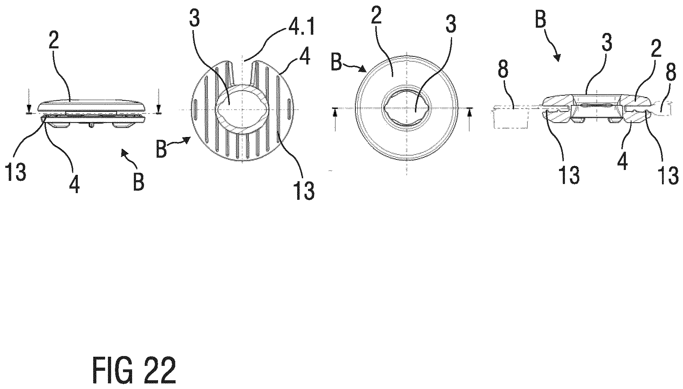

**Figur 22** zeigt verschiedene Darstellungen einer weiteren Ausführungsform für eine Bezugsdurchführung B mit parallel zueinander angeordneten Ausformungen 13 auf der Unterseite 4 im Bereich des Radialspalts R. Die Ausformungen 13 sind als rippenförmige Erhebungen ausgebildet und verlaufen parallel zu einer Längsausdehnung der Ausnehmung 4.1 auf der dem Radialspalt R zugewandten Seite der Unterseite 4, so dass eine Höhe des Radialspalts R zumindest abschnittsweise im Durchmesser verringert ist. Die Ausformungen 13 dienen insbesondere der Vermeidung einer sichtbaren Spaltbildung bei Anordnung eines Bezugs 8 im Radialspalt R, wie es insbesondere bei dünnen Materialien für einen Bezug 8, wie beispielsweise Leder, erfolgen kann. Zur Veranschaulichung sind im gezeigten Ausführungsbeispiel zwei Bezüge 8 mit unterschiedlichen Dicken im Radialspalt R angeordnet. Diese Ausführungsform erlaubt es, die Verwendung verschiedener Bezugsdicken mit einem Bauteil abzudecken.

### Bezugszeichenliste

- 1: Führungselement
- 2: Oberseite
- 3: Durchstieg
- 3.1: Rippen
- 3.2: Hinterschneidungen
- 4: Unterseite
- 4.1: Ausnehmung
- 5: Kopfstützenstange
- 6: Abstützungen
- 7: Orientierungselemente
- 8: Bezug
- 9: Auswölbungen
- 10: Durchgangsöffnung
- 10.1: Schlitz
- 11: Innensteg
- 12: Bügel
- 13: Ausformung

- B: Bezugsdurchführung
- R: Radialspalt
- K1, K2: Kontaktstellen
- L: Längsachse

## Patentansprüche

1. Bezugsdurchführung (B) für eine Kopfstützenstange (5) einer Kopfstütze eines Fahrzeugsitzes, welche als ein einteiliges, selbstfixierendes Führungselement (1) ausgebildet ist und welche eine geschlossene Oberseite (2) und eine von dieser über einen Durchstieg (3) beabstandete Unterseite (4) aufweist, wobei die Unterseite (4) zumindest eine Ausnehmung (4.1) aufweist, die kreissegmentförmig oder schlitzförmig ausgebildet ist und wobei sich die Ausnehmung (4.1) i im Wesentlichen in eine Umfangsrichtung der Unterseite (4) erstreckt.

2. Bezugsdurchführung (B) nach Anspruch 1,
**dadurch gekennzeichnet, dass** die Oberseite (2) und die Unterseite (4) jeweils kreisförmig ausgeformt und mittels des inneren Durchstiegs (3) über einen umlaufenden Radialspalt (R) voneinander beabstandet sind.

3. Bezugsdurchführung (B) nach einem der vorherigen Ansprüche, **gekennzeichnet durch** zumindest zwei einander gegenüberliegende, elastisch verformbare Rippen (3.1), die von einer Innenseite des Durchstiegs (3) radial nach innen stehend ausgeformt sind.

4. Bezugsdurchführung (B) nach einem der vorherigen Ansprüche, **gekennzeichnet durch** mindestens eine Hinterschneidung (3.2), welche an einer Innenseite des Durchstiegs (3) angeordnet ist.

5. Bezugsdurchführung (B) nach einem der vorherigen Ansprüche, **gekennzeichnet durch** zumindest eine Abstützung (6), welche oberflächenseitig auf der Unterseite (4) radial nach außen verläuft.

6. Bezugsdurchführung (B) nach einem der vorherigen Ansprüche, **gekennzeichnet durch** zumindest ein Orientierungselement (7).

7. Fahrzeugsitz mit einem Bezug (8), einer I Kopfstütze und einer Bezugsdurchführung (B) gemäß den Ansprüchen 1 bis 6.

8. Fahrzeugsitz nach Anspruch 7,
**dadurch gekennzeichnet, dass** der Bezug (8) eine Durchgangsöffnung (10) aufweist, von welcher sich radial nach außen ein Schlitz (10.1) erstreckt.

## Claims

1. Cover feed-through (B) for a head-restraint rod (5) of a head restraint of a vehicle seat, which cover feed-through is designed as a single-part, selffixing guide element (1) and which has a closed upper side (2) and a lower side (4) spaced apart from the latter via a passage (3), wherein the lower side (4) has at least one recess (4.1) in the shape of a segment of a circle or in the form of a slot, and wherein the recess (4.1) substantially extends in a circumferential direction of the lower side (4).

2. Cover feed-through (B) according to Claim 1, **characterized in that** the upper side (2) and the lower side (4) are both formed in a circular-ringshaped manner and, by means of the inner passage (3), are spaced apart from each other via an encircling radial gap (R).

3. Cover feed-through (B) according to either of the preceding claims, **characterized by** at least two mutually opposite, elastically deformable ribs (3.1) which are formed lying radially inward from an inner side of the passage (3).

4. Cover feed-through (B) according to one of the preceding claims, **characterized by** at least one undercut (3.2) which is arranged on an inner side of the passage (3).

5. Cover feed-through (B) according to one of the preceding claims, **characterized by** at least one support (6) which, on the upper face side, runs radially outward on the lower side (4).

6. Cover feed-through (B) according to one of the preceding claims, **characterized by** at least one orientation element (7).

7. Vehicle seat with a cover (8), a head restraint and a cover feed-through (B) according to Claims 1 to 6.

8. Vehicle seat according to Claim 7, **characterized in that** the cover (8) has a through opening (10) from which a slot (10.1) extends radially outward.

## Revendications

1. Traversée d'habillage (B) pour une barre d'appui-tête (5) d'un appui-tête d'un siège de véhicule qui est réalisée sous forme d'élément de guidage d'une seule pièce auto-fixant (1) et qui présente un côté supérieur fermé (2) et un côté inférieur (4) espacé de celui-ci par le biais d'un passage (3), le côté inférieur (4) présentant au moins un évidement (4.1) qui est réalisé en forme de segment de cercle ou en forme de fente et l'évidement (4.1) s'étendant essentiellement dans une direction périphérique du côté inférieur (4).

2. Traversée d'habillage (B) selon la revendication 1, **caractérisée en ce que** le côté supérieur (2) et le côté inférieur (4) sont formés à chaque fois sous forme circulaire et son espacés l'un de l'autre au moyen du passage intérieur (3) par le biais d'une fente radiale périphérique (R).

3. Traversée d'habillage (B) selon l'une quelconque des revendications précédentes,
**caractérisée par** au moins deux nervures déformables élastiquement (3.1) opposées l'une à l'autre qui sont formées de manière à faire saillie radialement vers l'intérieur depuis un côté intérieur du passage (3).

4. Traversée d'habillage (B) selon l'une quelconque des revendications précédentes,
**caractérisée par** au moins une contre-dépouille (3.2) qui est disposée au niveau d'un côté intérieur du passage (3).

5. Traversée d'habillage (B) selon l'une quelconque des revendications précédentes,
**caractérisée par** au moins un support (6) qui s'étend radialement vers l'extérieur du côté de la surface sur le côté inférieur (4).

6. Traversée d'habillage (B) selon l'une quelconque des revendications précédentes,
**caractérisée par** au moins un élément d'orientation (7) .

7. Siège de véhicule comprenant un habillage (8), un appui-tête et une traversée d'habillage (B) selon les revendications 1 à 6.

8. Siège de véhicule selon la revendication 7,
**caractérisé en ce que** l'habillage (8) présente une ouverture de passage (10) depuis laquelle une fente (10.1) s'étend radialement vers l'extérieur.
